# EUROPÄISCHE PATENTSCHRIFT

(11) **EP 1 380 400 B1**
(45) Veröffentlichungstag und Bekanntmachung des Hinweises auf die Patenterteilung: **18.02.2009**
(21) Anmeldenummer: 03014792.0
(22) Anmeldetag: 28.06.2003
(51) Int. Cl.: B29C 45/27, B29C 45/28

(54) **Spritzgiessdüse mit Nadelverschluss und seitlichen Austrittsöffnungen**
Edge gated injection moulding nozzle with needle valves
Buse à mouler par injection avec fermeture à aiguille et entrées d'injection latérales

(30) Priorität: 10.07.2002 DE 10231093
(43) Veröffentlichungstag der Anmeldung: 14.01.2004
(73) Patentinhaber: Otto Männer Innovation GmbH, 79353 Bahlingen (DE)
(72) Erfinder: Männer, Hans-Peter, 79353 Bahlingen (DE)
(74) Vertreter: Dimmerling, Heinz

(56) Entgegenhaltungen:
- EP-A- 0 186 413
- EP-A- 0 407 971
- EP-A- 0 447 573
- PATENT ABSTRACTS OF JAPAN vol. 2000, no. 01, 31. Januar 2000 (2000-01-31) & JP 11 277573 A (TOYODA GOSEI CO LTD), 12. Oktober 1999 (1999-10-12)

## Beschreibung

Die Erfindung betrifft eine Spritzgießdüse für Kunststoff nach dem Oberbegriff des Anspruchs 1.

Eine derartige Spritzgießdüse ist beispielsweise aus PATENT ABSTRACTS OF JAPAN Bd. 2000, Nr. 01, 31. Januar 2000 -& JP 11 277573 A (TOYODA GOSEI CO LTD), 12. Oktober 1999 bekannt. Des Weiteren ist aus EP 0 447 573 A1 eine ähnliche Spritzgießdüse bekannt.

Darüber hinaus sind Spritzgießdüsen in der Praxis bekannt, welche in der Regel wenigstens zwei oder vier radial zur Seite gerichtete Austrittsöffnungen haben, um beispielsweise mehrere zylindrische Kunststoffteile gleichzeitig seitlich anspritzen zu können. Nach dem Spritzvorgang muss der in der Austrittsöffnung befindliche Kunststoff erkalten und bildet also einen kalten Pfropfen. Beim nächsten Spritzgießvorgang muss dieser kalte Pfropfen durch den Spritzdruck in die Form befördert werden, was an den Mündungen der Austrittsöffnungen zu verschiedenen Zeiten erfolgen und zu unterschiedlichen Füllungen führen kann. Ferner sind die gespritzten Teile zunächst noch mit dem Anguss und dem in der Düse befindlichen Kunststoff verbunden und müssen beim Entfernen davon abgerissen werden, was zu einem unschönen Anguss oder gar zur Beschädigung der gespritzten Teile führen kann.

Um dies zu vermeiden wurde eine Spritzgießdüse mit wenigstens zwei Austragsöffnungen geschaffen, bei welcher eine gleichmäßigere Füllung der verschiedenen Formen erreicht werden kann und das Entformen der gespritzten Teile vereinfacht und dabei die Gefahr einer Beschädigung des gespritzten Teils vermindert oder vermieden ist.

Hierzu wurde bei der Spritzgießdüse vorgesehen dass die nach verschiedenen Seiten gerichteten Austrittsöffnungen jeweils einen Nadelverschluss mit einer in Richtung der Austrittsöffnung verstellbaren Verschlussnadel sowie einen Antrieb zum Verstellen der Verschlussnadeln in deren Schließposition aufweist.

Anstelle von, im wesentlichen offenen Spritzgießdüsen mit mehreren Austrittsöffnungen werden die Austrittsöffnungen also mit Nadelverschlüssen versehen, so dass nach dem Spritzgießvorgang die Austrittsöffnungen für den Kunststoff verschlossen werden können, also keine Verbindung mehr zu dem gespritzten Teil besteht. Auch ein kalter Pfropfen in dem Mündungsbereich der Austrittsöffnungen wird vermieden, so dass ein nächster Spritzgießvorgang entsprechend erleichtert ist. In vorteilhafter Weise ergibt sich durch diese Trennung des gespritzten Teils von der Austrittsöffnung mit Hilfe der Verschlussnadeln ein sehr genauer, kaum oder gar nicht erkennbarer Anguss an dem gespritzten Teil.

Nachteilig ist bei den bekannten Spritzgießdüsen, dass der Antrieb zum Verstellen der Verschlussnadeln nicht optimal ist.

Es ist Aufgabe der Erfindung eine eingangs genannte Spritzgießdüse derart auszubilden, das sie einen einfachen und zuverlässigen Antrieb zum Verstellen der Verschlussnadeln haben.

Die Lösung dieser Aufgabe ergibt sich aus den kennzeichnenden Merkmalen des Anspruchs 1.

Gemäß der Erfindung ist eine Spritzgießdüse für Kunststoff mit wenigstens zwei in ihrem Endbereich nach verschiedenen Seiten gerichteten Austrittsöffnungen zum Beaufschlagen verschiedener Angussöffnungen und mit einem Zuführkanal für den Kunststoff zu den Austrittsöffnungen, wobei die nach verschiedenen Seiten gerichteten Austrittsöffnungen jeweils einen Nadelverschluss mit einer in Richtung der Austrittsöffnung verstellbaren Verschlussnadel sowie einen Antrieb zum Verstellen der Verschlussnadeln in deren Schließposition aufweisen, dadurch gekennzeichnet, dass ein gemeinsames Antriebselement zum Verstellen mehrerer oder aller Verschlussnadeln in Schließrichtung vorgesehen ist und dass dieses Antriebselement ein zwischen den Enden mehrerer Verschlussnadeln bewegbarer, unterschiedliche Querschnitte aufweisender Verstellkörper ist.

Die Spritzgießdüse kann für jede mit einer Verschlussnadel versehene seitliche Austrittsöffnung einen eigenen Zuführkanal für den Kunststoff aufweisen und diese Zuführkanäle können außerhalb der Mittel der Spritzgießdüse angeordnet sein. Somit kann jede Austrittsöffnung unabhängig von der anderen mit Kunststoff beschickt werden und vor allem bleibt auch der zentrale Mittelbereich der Spritzgießdüse frei für einen noch zu erläuternden Antrieb für die Verschlussnadeln.

Dabei ist es günstig, wenn die Zuführkanäle für den Kunststoff nahe den Enden der einzelnen Verschlussnadeln vor den Mündungen der Austrittsöffnungen in diese eintreten. Der Kunststoff kann so möglichst nahe an der Mündung der Austrittsöffnung in diese eingeführt werden und gleichzeitig dazu ausgenutzt werden, die Verschlussnadel entgegen ihrer Schließbewegung mit dem Spritzdruck zu beaufschlagen, um die Öffnungsbewegung zu unterstützen oder durchzuführen.

Günstig ist es, wenn die Austrittsöffnungen und die in ihnen verschiebbaren Verschlussnadeln etwa radial und insbesondere in der selben quer zur Längsmittelachse der Spritzgießdüse verlaufenden Ebene angeordnet sind. Dadurch ergeben sich definierte Angussstellen und vor allem wird eine gemeinsame Betätigung der Verschlussnadeln erleichtert.

Sehr vorteilhaft ist es, dass die Verschlussnadeln der Austrittsöffnungen einen gemeinsamen Antrieb zumindest zum Verschieben in ihre Schließposition haben. Da diese Verschlussnadeln radial angeordnet sind, befinden sich ihre der Mündung der Austrittsöffnung abgewandten Enden relativ nah beieinander, so dass die Verwendung eines gemeinsamen Antriebs mit einer entsprechenden Vereinfachung der gesamten Mechanik gut möglich ist. Wichtig ist vor allem der Antrieb zum Verschieben in Schließposition, während für die entgegengesetzte Verstellbewegung der Verschlussnadeln in an sich bekannter Weise der Spritzgießdruck ausgenutzt werden kann.

Die Verschlussnadeln können in Schließrichtung gesehen vor der Mündung des Zuführkanals für den Kunststoff eine Querschnittsvergrößerung oder einen Bund oder dergleichen als Wirkfläche für den Spritzgießdruck zum Öffnen der Verschlussnadel haben und der in Schließrichtung wirkende Antrieb kann während des Öffnens der jeweiligen Verschlussnadel ausschaltbar und/oder überwindbar sein. Durch eine solche Querschnittsvergrößerung kann eine entsprechend große Kraft zum Öffnen der jeweiligen Verschlussnadel während eines neuen Spritzzyklus erzeugt werden.

Zum Verschieben der Verschlussnadeln in Schließposition können Druckfedern und/oder mechanisch an den Verschlussnadeln, insbesondere an ihrem der Austrittsöffnung abgewandten Ende, angreifende Verstellmittel vorgesehen sein. Mechanische Verstellmittel haben dabei gegenüber Druckfedern den Vorteil, dass sie während des Öffnens der Nadel in eine Position gebracht werden können, die keinen Gegendruck wie eine Druckfeder erzeugt.

Für eine einfache mechanische Anordnung mit möglichst wenig bewegten Teilen ist es günstig, wenn ein gemeinsames Antriebselement zum Verstellen mehrerer oder aller Verschlussnadeln in Schließrichtung vorgesehen ist und wenn dieses Antriebselement ein zwischen den Enden mehrerer Verschlussnadeln bewegbarer, unterschiedliche Querschnitte aufweisender Verstellkörper, beispielsweise ein Konus, Kegel oder dergleichen sich verjüngendes Element oder eine Nocken- oder Exzenterscheibe oder dergleichen ist. Es kann also entweder ein Konus oder Kegel zwischen die Enden der Verschlussnadeln tiefer eingeschoben werden, wodurch diese Enden auseinander und damit die Verschlussnadeln in Schließstellung verschoben werden. Es kann aber zwischen diesen Enden auch ein Drehelement vorgesehen sein, welches in Umfangsrichtung einen zunehmenden Durchmesser hat, der dann in Gegenrichtung oder bei einer noch weitergehenden Drehung wieder abnimmt, so dass durch diese Drehbewegung die Enden der Verschlussnadeln auseinander und damit die Verschlussnadeln in Schließstellung verschoben werden können.

Zum Verstellen eines kegelförmigen oder Konuskörpers kann eine in axialer Richtung zentral innerhalb der Spritzgießdüse verstellbare Schub- und Zugstange oder zum Verdrehen einer Nocken- oder Exzenterscheibe kann eine zentral in der Spritzgießdüse angeordnete Drehstange vorgesehen sein. Es genügt also eine einzige Stange, um die mehreren Verschlussnadeln mechanisch so zu beaufschlagen, dass sie in Schließstellung verschoben werden, wobei diese Stange rechtwinklig zur Bewegung der Verschlussnadeln und auch rechtwinklig zu deren Längserstreckung angeordnet sein kann, also ihrerseits an ihrem Ende gut mit einem entsprechenden Dreh- oder Axialantrieb, insbesondere einem Kolben, einem Spindelantrieb versehen oder gekuppelt sein kann.

Eine weitere Ausgestaltung der Erfindung und insbesondere der Betätigung der Verschlussnadeln kann darin bestehen, dass das an den Verschlussnadeln angreifende Antriebselement derart mit diesen gekuppelt und verbunden ist, dass die eine Bewegung zum Verschließen und die entgegengesetzte Bewegung zum Zurückziehen der Verschlussnadeln in ihrer Öffnungsposition dient. Beispielsweise könnte ein konischer Verdrängungskörper zwischen den Nadelenden mit entsprechenden gegenseitigen Verhakungen und Führungen an den Nadelenden so angreifen, dass auch beim Zurückziehen dieses Konuskörpers aufgrund des Formschlusses mit dem Nadelende dieses dann wieder in die Öffnungsposition zurückgezogen wird.

Eine Ausgestaltung der Erfindung von ganz erheblicher vorteilhafter Bedeutung kann darin bestehen, dass das Gehäuse der Spritzgießdüse quer zu den Zuführkanälen für den Kunststoff unterteilt ist und im Bereich der Unterteilung einen Wärmeausgleichsspalt hat. Dadurch kann erreicht werden, dass aufgrund des heißen Spritzgießwerkstoffs auftretende Wärmebewegungen von den Verschlussnadeln und ihren Lagerstellen ferngehalten bleiben, also die Mündungen der Austrittsöffnungen und die Verschlussnadeln trotz der Wärmebewegungen ihre Position genau beibehalten. Dennoch kann das Düsengehäuse die auftretenden Wärmedehnungen und Wärmebewegungen ausführen.

Zweckmäßig ist es dabei, wenn der Wärmeausgleichsspalt an dem Gehäuse der Spritzgießdüse zumindest im Bereich der Zuführkanäle für den Kunststoff durch eine Überlappung oder dergleichen abgedichtet ist. Dadurch wird sichergestellt, dass im Bereich des Wärmeausgleichsspalts kein Spritzgießwerkstoff austreten und spätere Wärmebewegungen blockieren kann.

Beispielsweise kann die zur Abdichtung des Wärmeausgleichsspaltes im Bereich der Zuführkanäle dienende Überlappung durch Schiebehülsen, insbesondere durch jeweils eine an der Innen- oder Außenseite des Zuführkanals angeordnete Schiebehülse gebildet sein. Dadurch werden die Wärmeausgleichsbewegungen des Gehäuses der Spritzgießdüse ungehindert möglich, ohne dass Spritzgießwerkstoff in den Wärmeausgleichsspalt gelangen kann.

Eine konstruktiv günstige Anordnung ergibt sich, wenn die Austrittsöffnungen und die darin verschiebbaren Verschlussnadeln in das Gehäuse der Spritzgießdüse eingesetzten und gegebenenfalls austauschbaren Hülsen angeordnet sind. Dies erleichtert die Montage und den eventuellen Austausch der Verschlussnadeln.

Dabei können die Verschlussnadeln jeweils von außen in ihre Lagerstelle axial einführbar und mittels einer an der Außenseite des Gehäuses aufschraubbaren, die Mündung der Austrittsöffnung aufweisenden Haltekappe festlegbar sein. Zum Austausch der Nadel braucht dann nur diese Haltekappe wieder abgeschraubt zu werden, um die Verschlussnadel herausziehen zu können. Auch diese Haltekappen selbst, die die Mündung der Austrittsöffnung aufweisen, können entsprechend einfach ausgetauscht werden.

Es ist aber auch oder zusätzlich möglich, dass die Verschlussnadeln in die sie aufnehmende Hülse vor deren Einsetzen in den Düsenkörper von der späteren Innenseite aus einschiebbar und mittels eines Bundes, einer Querschnittsvergrößerung oder dergleichen in axialer Richtung derart festlegbar sind, dass die Verstellbewegung in Schließrichtung begrenzt und die Verschlussnadel in radialer Richtung festgelegt ist. Dadurch kann die erwähnte Durchmesservergrößerung, die auch den Spritzgießdruck in eine Öffnungsbewegung der Verschlussnadel umwandeln kann, eine Doppelfunktion erhalten.

Je nach Abmessung der gesamten Spritzgießdüse und je nach Anwendungsfall können mehr als zwei Austrittsöffnungen mit darin verstellbaren Verschlussnadeln an demselben Düsengehäuse insbesondere in derselben Ebene angeordnet und mit demselben Antriebselement in Schließstellung bewegbar sein.

Vor allem bei Kombination einzelner oder mehrerer der vorbeschriebenen Merkmale und Maßnahmen ergibt sich eine Spritzgießdüse mit mehreren radial nach der Seite gerichteten Austrittsöffnungen, bei welcher ein kalter Pfropfen in diesen Austrittsöffnungen mit den damit verbunden Nachteilen vermieden werden kann.

Nachstehend sind Ausführungsbeispiele der Erfindung anhand der Zeichnung näher beschrieben. Es zeigt in zum Teil schematisierter Darstellung:
- Fig. 1: eine Ansicht einer erfindungsgemäßen Spritzgießdüse in Verbindung mit einer der von ihr zu beaufschlagenden Formen,
- Fig. 2: einen Längsschnitt eines Ausführungsbeispiels der erfindungsgemäßen Spritzgießdüse gemäß der Schnittlinie A-A in Fig. 1, wobei in den voneinander weggerichteten Austrittsöffnungen jeweils eine Verschlussnadel angeordnet ist und diese Verschlussnadeln durch einen an ihren einander zugewandten Enden gleichzeitig angreifenden Konuskörper aus einer Offenstellung in die dargestellte Schließposition verschoben sind,
- Fig. 3: in vergrößertem Maßstab die Verschlussnadeln und den sie gemeinsam beaufschlagenden Konuskörper in Schließstellung, wobei die Mündungen der Austrittsöffnungen durch separate, am Düsengehäuse befestigte Kappen gebildet sind,
- Fig. 4: einen Längsschnitt gemäß der Linie A-A in Fig. 1 eines abgewandelten Ausführungsbeispiels, bei welchem die durch die Verschlussnadeln ganz oder teilweise verschließbaren Mündungen in die jeweilige Form eingearbeitet sind,
- Fig. 5: eine vergrößerte Darstellung der Verschlussnadeln gemäß Fig. 4,
- Fig. 6: einen Querschnitt gemäß der Linie B-B in Fig. 7 und
- Fig. 7: einen Längsschnitt gemäß der Schnittlinie A-A in Fig. 1 betreffend ein Ausführungsbeispiel, bei welchem zwischen den Enden der Verschlussnadeln eine durch eine Drehstange beaufschlagte Nockenscheibe angeordnet ist, wobei die Verschlussnadeln sich in Offenstellung befinden und die Mündung der Austrittsöffnung in einer separaten Kappe angeordnet sind,
- Fig. 8: eine vergrößerte Darstellung der Verschlussnadeln gemäß Fig. 6 und 7 in Schließstellung,
- Fig. 9: eine der Fig. 6 entsprechende Darstellung eines Ausführungsbeispiels mit einer Nockenscheibe zwischen den Enden der Verschlussnadeln, wobei die durch die Nadel zu verschließende oder teilweise zu verschließende Mündung in die Form eingearbeitet ist,
- Fig. 10: einen Schnitt gemäß der Linie A-A in Fig. 1 bei einer Ausführungsform gemäß Fig. 9 sowie
- Fig. 11: in vergrößerter Darstellung die Verschlussnadeln mit der zwischen ihren Enden angeordneten Exzenterscheibe gemäß Fig. 9 und 10 in Schließposition.

Bei den nachstehend beschriebenen Ausführungsformen und Ausführungsbeispielen erhalten in ihrer Funktion ähnliche oder übereinstimmende Teile auch bei abgewandelter Formgebung übereinstimmende Bezugszahlen.

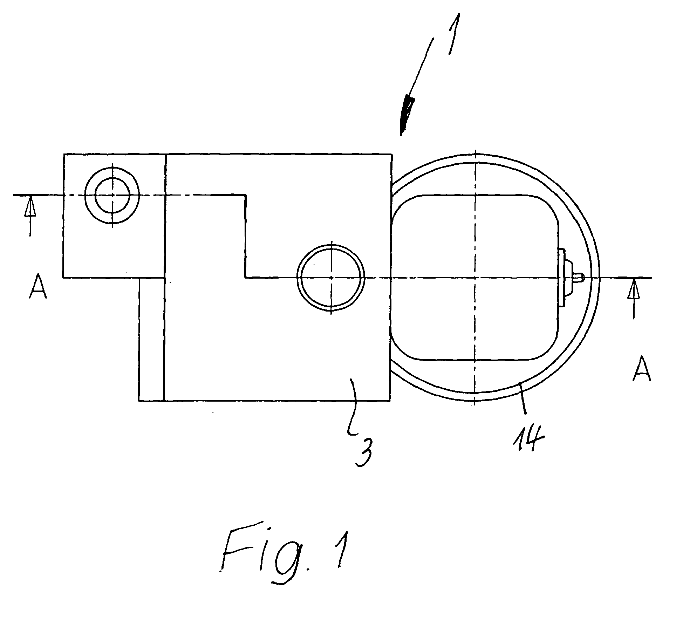

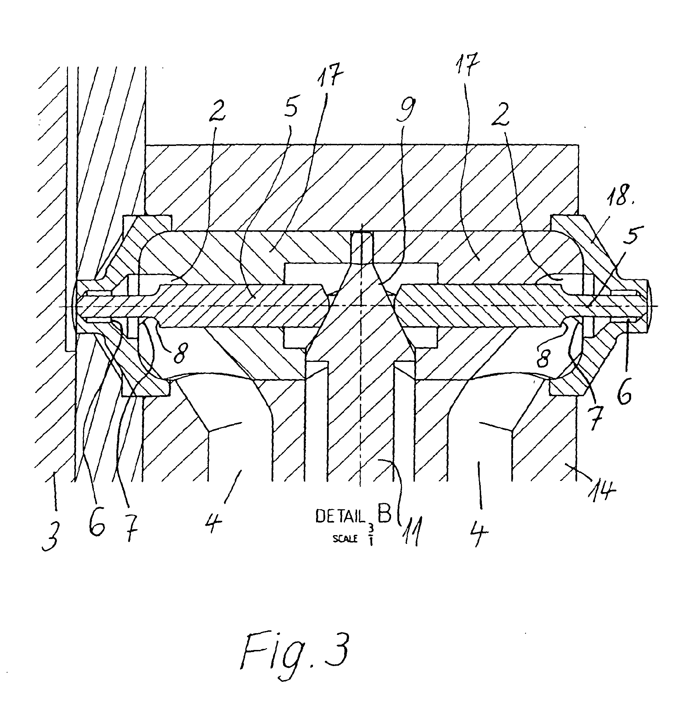

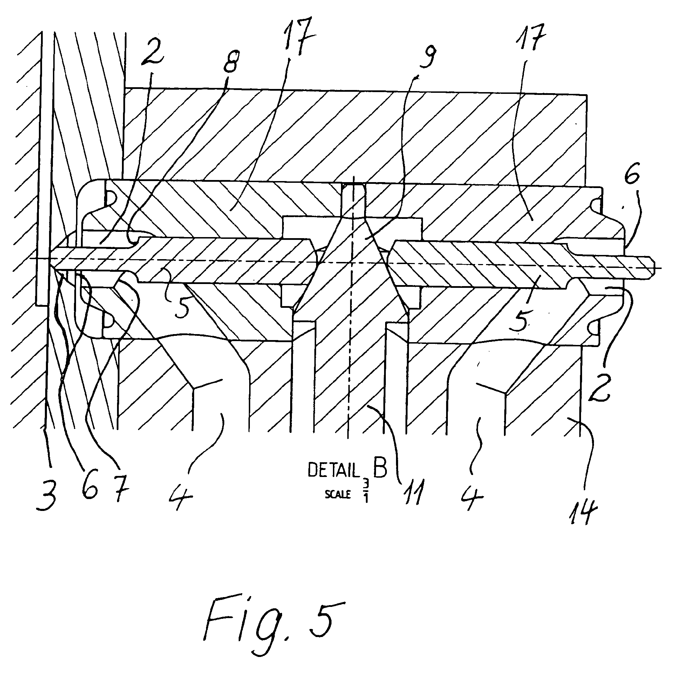

Eine im ganzen mit 1 bezeichnete Spritzgießdüse für Kunststoff weist wenigstens zwei in ihrem Endbereich nach verschiedenen Seiten gerichtete Austrittsöffnungen 2 zum Beaufschlagen verschiedener Angussöffnungen an verschiedenen Formen 3 auf, von denen in Fig. 1 bis 11 jeweils nur eine dargestellt ist. Man erkennt aber in all diesen Figuren neben der Austrittsöffnung 2, die zu der dargestellten Form 3 führt und gerichtet ist, die entgegengesetzt gerichtete weitere Austrittsöffnung 2, mit der eine weitere Form beaufschlagt werden kann und soll.

In noch zu beschreibender Weise enthält diese Spritzgießdüse 1 einen Zuführkanal 4 für den Kunststoff zu den Austrittsöffnungen 2.

In allen Ausführungsbeispielen ist vorgesehen, dass die nach verschiedenen Seiten gerichteten Austrittsöffnungen 2 jeweils einen Nadelverschluss mit einer in Richtung der Austrittsöffnung 2 verstellbaren Verschlussnadel 5 aufweisen, wobei auch ein noch zu beschreibender Antrieb zum Verstellen dieser Verschlussnadeln 5 zumindest in ihre Schließposition vorgesehen ist.

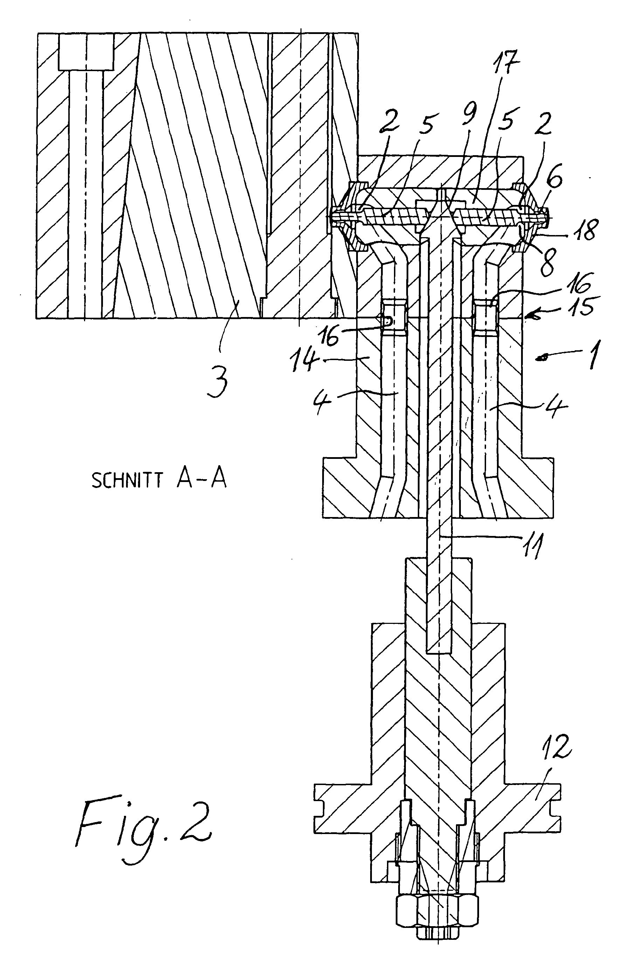

Gemäß den Figuren 2 bis 11 weist die Spritzgießdüse 1 für jede mit einer Verschlussnadel 5 versehene, gegenüber der Längserstreckung der gesamten Spritzgießdüse 1 seitlich gerichtete Austrittsöffnung 2 einen eigenen Zuführkanal 4 für den Kunststoff auf und die entsprechend der Zahl der Verschlussnadeln 5 und Austrittsöffnungen 2 mehrfach vorgesehenen Zuführkanäle 4 befinden sich außerhalb der Mitte der gesamten Spritzgießdüse 1, so dass diese Mitte für noch zu beschreibende Elemente des Antriebs für die Verschlussnadeln 5 in vorteilhafter Weise frei bleibt.

Bei allen Ausführungsbeispielen ist auch vorgesehen, dass diese Zuführkanäle 4 für den Kunststoff nahe den Enden der einzelnen Verschlussnadeln 5 vor den Mündungen 6 der Austrittsöffnungen 2 in diese eintreten. Die Austrittsöffnungen 5 können auch als Kanäle angesehen werden, in denen die Verschlussnadeln 5 hin- und herbewegbar sind und vor den Mündungen 6 dieser Kanäle oder Austrittsöffnungen 2 treten die Zuführkanäle 4 von der Seite her ein, wobei sie in ihrem Endbereich kurz vor dem Eintritt noch eine Richtungsänderung in Richtung zu der Mündung 6 hin haben können.

Die Austrittsöffnungen 2 und die in ihnen verschiebbaren Verschlussnadeln 5 sind gemäß den Figuren 1, 6, 8, 9 und 11 etwa radial und insbesondere in derselben quer zur Längsmittelachse der Spritzgießdüse 1 verlaufenden Ebene angeordnet, so dass sie auch gemeinsam betätigt werden können. Die Verschlussnadeln 5 haben nämlich einen noch zu beschreibenden, unterschiedlich ausführbaren Antrieb zum Verschieben zumindest in ihre Schließposition.

Zum Verschieben der Verschlussnadeln 5 in ihre Öffnungsposition dient der Spritzgießdruck und dazu ist vorgesehen, dass die Verschlussnadeln 5 in Schließrichtung gesehen vor dem Eintritt 7 oder der Mündung des Zuführkanals 4 in die Austrittsöffnung 2 eine Querschnittsvergrößerung 8 in Form eines Absatzes oder gegebenenfalls einen Bund oder dergleichen als Wirkfläche für den Spritzgießdruck zum Öffnen der Verschlussnadel 5 haben und der in Schließrichtung wirkende Antrieb während des Öffnens der jeweiligen Verschlussnadel 5 ausgeschaltet oder überwindbar ist. Zu Beginn eines Spritzvorganges können also die Verschlussnadeln 5 durch den flüssigen Kunststoff und dessen Druck aus ihrer Schließlage dadurch zurückverschoben werden, dass der Spritzgießdruck an der Querschnittsvergrößerung 8 angreift und die entsprechende Verschlussnadel 5 wie einen Kolben so zurückverschiebt, dass die Mündung 6 der Austrittsöffnung 2 von der Nadel 5 und ihrem Verschlussende freigegeben wird.
Dient als Antrieb zum Verschließen der Verschlussnadeln 5 eine oder mehrere Druckfedern, wird deren Kraft durch den Spritzgießdruck einfach überwunden. In den Ausführungsbeispielen sind jedoch noch zu beschreibende Verstellmittel vorgesehen, die für diesen Vorgang des Verschiebens der Verschlussnadel 5 in Offenstellung in eine entsprechende Position zurückverstellt werden.

In den dargestellten Ausführungsbeispielen ist jeweils ein gemeinsames Antriebselement zum Verstellen mehrerer oder aller Verschlussnadeln 5 in Schließrichtung vorgesehen und dieses Antriebselement ist dabei ein zwischen den einander zugewandten Enden mehrerer Verschlussnadeln 5 bewegbarer, unterschiedliche Querschnitte aufweisender Verstellkörper.

In den Ausführungsbeispielen gemäß Fig. 2 bis 5 ist dieser Verstellkörper ein Konus 9 oder Kegel oder dergleichen sich verjüngendes Element, das mit seinem zunächst kleineren Querschnitt zwischen die Enden der Verschlussnadeln 5 eingreift und durch seine eigene axiale Verstellung diese Enden der Verschlussnadeln und damit die Nadeln 5 selbst in radialer Richtung auseinander verschiebt, so dass sie gleichzeitig in ihre Schließpositionen gelangen. Die Zeichnungen zeigen dabei jeweils diese Schließstellung.

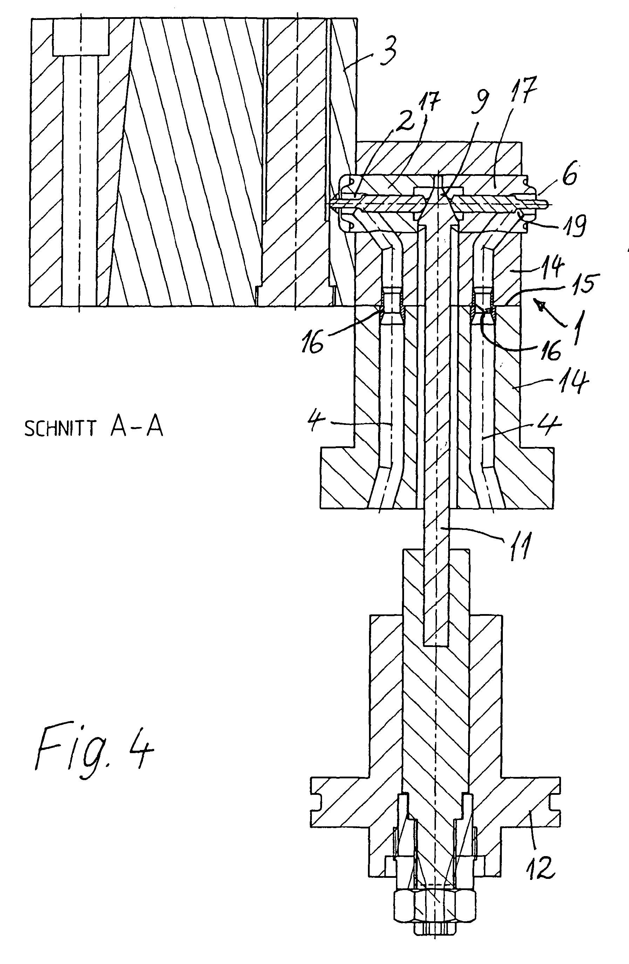

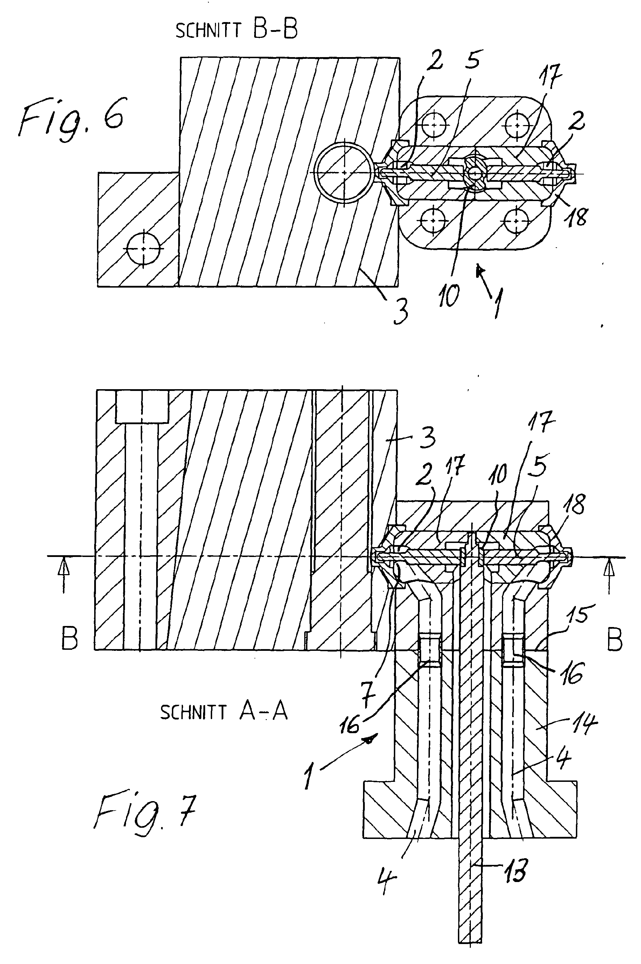

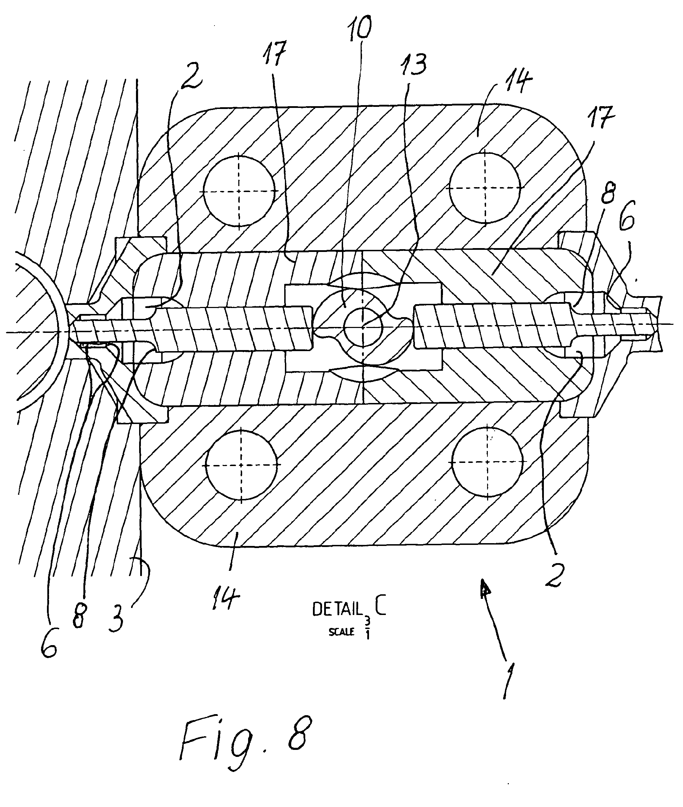

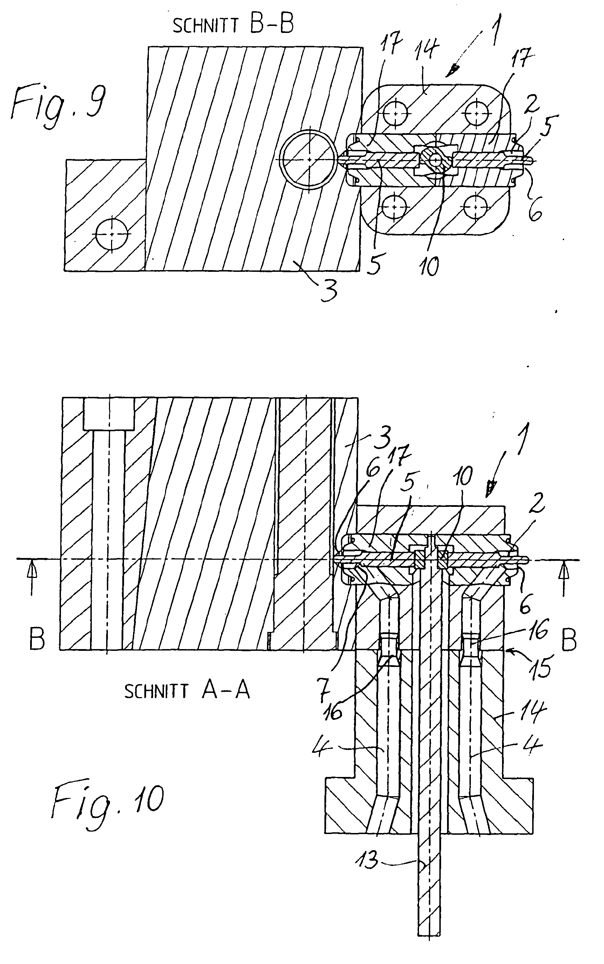

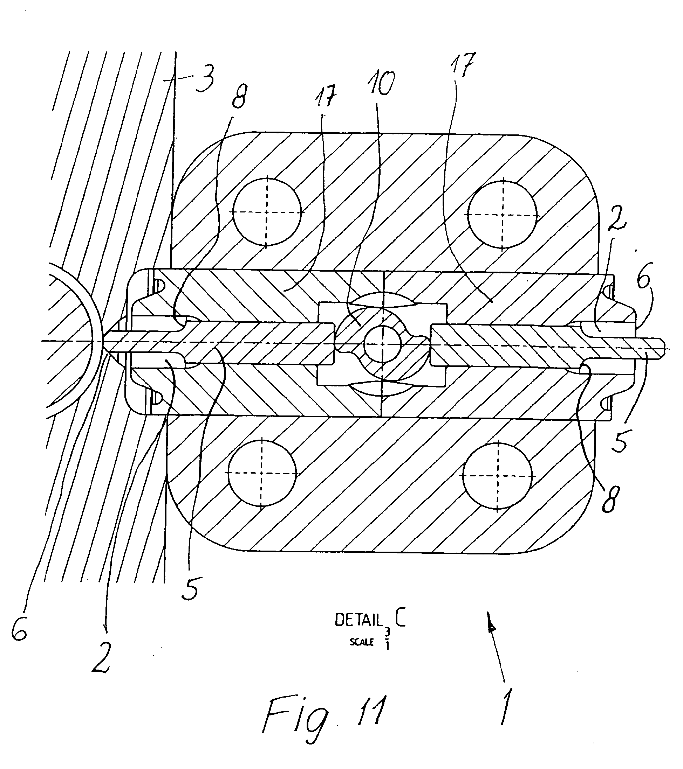

Gemäß den Figuren 6 bis 11 kann der Verstellkörper aber auch eine Nocken- oder Exzenterscheibe 10 sein, deren Umfang sich von einer kleineren zu einer größeren Abmessung und umgekehrt verändert. In diesem Falle ist zum Schließen der Verschlussnadeln diese Scheibe aus der in Fig. 6 dargestellten Position beispielsweise im Urzeigersinn zu verdrehen, um die in Fig. 8 und 11 dargestellte Schließposition zu erreichen. Auch Fig. 9 und 10 zeigt eine derartige Schließposition der Verschlussnadeln 5.
Zum Verstellen des kegelförmigen oder Konuskörpers 9 dient gemäß Fig. 2 bis 5 eine in axialer Richtung zentral innerhalb der Spritzgießdüse 1 verstellbare Schub- und Zugstange 11, an deren Ende gemäß Fig. 2 und 4 ein Kolben 12 angreift, der in einem nicht näher dargestellten Zylinder durch ein Druckmedium beaufschlagbar hin- und herverstellbar ist, um die Stange 11 und den daran befindlichen Konus 9 entsprechend zu verschieben. Es könnte aber auch jedes beliebige andere geeignete Antriebselement an dieser Stange 11 angreifen.

Zum Verdrehen der Nocken- oder Exzenterscheibe 10 dient eine zentral in der Spritzgießdüse 1 angeordnete Drehstange 13, an welcher ein entsprechender Drehantrieb beliebiger Konstruktion angreifen kann.

Bei allen Ausführungsbeispielen ist vorgesehen, dass das Gehäuse 14 der Spritzgießdüse quer zu den Zuführkanälen 4 unterteilt ist und im Bereich der Unterteilung einen Wärmeausgleichsspalt 15 hat. Dadurch kann erreicht werden, dass Wärmebewegungen von diesem Wärmeausgleichsspalt 15 aufgenommen werden, also die Verschlussnadeln 5 ihre präzise Position trotz solcher Wärmebewegungen behalten und auch nicht durch Wärmespannungen belastet werden.

Der Wärmeausgleichsspalt 15 ist dabei in dem Gehäuse 14 zumindest im Bereich der Zuführkanäle 4 abgedichtet, und zwar dadurch, dass im Bereich der Zuführkanäle 4 Schiebehülsen 16 an der Außenseite oder gemäß den Ausführungsbeispielen im Inneren des jeweiligen Zuführkanals 4 angeordnet sind. Dadurch wird sichergestellt, dass trotz dieses Wärmeausgleichsspalts 15 der Spritzgießwerkstoff nicht aus den Zuführkanälen 4 austreten kann.

Die Austrittsöffnungen 2 und die darin verschiebbaren Verschlussnadeln 5 sind in allen Ausführungsbeispielen in austauschbaren Hülsen 17 angeordnet, die in das Gehäuse 14 der Spritzgießdüse 1 - bevorzugt auswechselbar - eingesetzt sind. Dies erleichtert die Montage vor allem auch der Verschlussnadeln 5 und deren Austausch im Falle von Verschleiß.

Die Verschlussnadeln 5 können jedoch auch jeweils von außen in ihre in diesen Hülsen 17 befindlichen Lagerstelle axial eingeführt und mittels einer an der Außenseite anschraubbaren, die Mündung 6 der Austrittsöffnung 2 aufweisenden Haltekappe 18 festlegbar sein. Diese Anordnung erkennt man in den Figuren 2 bis 3 und in den Figuren 6 bis 8. Bei den anderen Ausführungsbeispielen hingegen ist eine solche Haltekappe 18 nicht vorgesehen und die der Mündung 6 entsprechende Öffnung in die Form 3 verlegt, in die das entsprechende Verschlussende der Verschlussnadel 5 verschiebbar ist.

Die Haltekappe 18 hat dabei noch eine weitere Funktion, indem sie nämlich die Verschlussnadel 5 an deren Querschnittsvergrößerung 8 gegen ein ungewolltes Austreten aus ihrer Lagerung hindern könnte, während bei den Ausführungsbeispielen ohne eine derartige Haltekappe 18 ein entsprechender Gegenanschlag 19 für die Querschnittsvergrößerung 8 vorgesehen sein könnte. In beiden Fällen wird also die Verschlussnadel 5 in ihrer axialen Richtung derart festgelegt, dass die Verstellbewegung in Schließrichtung begrenzt und die Verschlussnadel 5 in radialer Richtung festgelegt ist.

In den Ausführungsbeispielen sind jeweils zwei entgegengesetzt orientierte Verschlussnadeln 5 vorgesehen, jedoch könnten in demselben Düsengehäuse 14 auch in derselben Ebene noch mehr derartige Verschlussnadeln 5, beispielsweise drei oder vier Verschlussnadeln 5 vorgesehen und jeweils mit demselben Antriebselement beaufschlagbar sein, soweit es der Platz an den einander zugewandten Enden der Verschlussnadeln 5 zulässt.

Die Spritzgießdüse 1 für Kunststoff mit wenigstens 2 nach verschiedenen Seiten und entgegengesetzt gerichteten Austrittsöffnungen 2 ist nicht als offene Spritzgießdüse ausgebildet, sondern weist in den Austrittsöffnungen 2 jeweils eine Verschlussnadel 5 auf, für welche Verschlussnadeln 5 auch ein Antrieb zum Verstellen zumindest in die Schließposition vorgesehen ist. Somit lässt sich ein kalter Pfropfen an dem einer Form 3 zugewandten Ende der Austrittsöffnungen 2 vermeiden unabhängig davon, ob die Verschlussnadeln diese Austrittsöffnungen 2 an ihrer Mündung 6 vollständig verschließen oder noch einen minimalen Spalt freilassen.

## Patentansprüche

1. Spritzgießdüse (1) für Kunststoff mit wenigstens zwei in ihrem Endbereich nach verschiedenen Seiten gerichteten Austrittsöffnungen (2) zum Beaufschlagen verschiedener Angussöffnungen und mit einem Zuführkanal (4) für den Kunststoff zu den Austrittsöffnungen (2), wobei die nach verschiedenen Seiten gerichteten Austrittsöffnungen (2) jeweils einen Nadelverschluss mit einer in Richtung der Austrittsöffnung (2) verstellbaren Verschlussnadel (5) sowie einen Antrieb zum Verstellen der Verschlussnadeln (5) in deren Schließposition aufweisen, **dadurch gekennzeichnet, dass** ein gemeinsames Antriebselement zum Verstellen mehrerer oder aller Verschlussnadeln (5) in Schließrichtung vorgesehen ist und dass dieses Antriebselement ein zwischen den Enden mehrerer Verschlussnadeln (5) bewegbarer, unterschiedliche Querschnitte aufweisender Verstellkörper ist.

2. Spritzgießdüse nach Anspruch 1, **dadurch gekennzeichnet, dass** der Verstellkörper, ein Konus (9), Kegel oder dergleichen sich verjüngendes Element oder eine Nocken- oder Exzenterscheibe (10) oder dergleichen ist.

3. Spritzgießdüse nach Anspruch 1 oder 2, **dadurch gekennzeichnet, dass** sie für jede mit einer Verschlussnadel (5) versehene seitliche Austrittsöffnung (2) einen eigenen Zuführkanal (4) für den Kunststoff aufweist und die Zuführkanäle (4) außerhalb der Mitte der Spritzgießdüse (1) angeordnet sind.

4. Nadelverschlussdüse nach einem der Ansprüche 1 bis 3, **dadurch gekennzeichnet, dass** die Zuführkanäle (4) für den Kunststoff nahe den Enden der einzelnen Verschlussnadel (5) vor den Mündungen (6) der Austrittsöffnungen (2) in diese eintreten.

5. Spritzgießdüse nach einem der Ansprüche 1 bis 4, **dadurch gekennzeichnet, dass** die Austrittsöffnungen (2) und die in ihnen verschiebbaren Verschlussnadeln (5) etwa radial und insbesondere in der selben quer zur Längsmittelachse der Spritzgießdüse (1) verlaufenden Ebene angeordnet sind.

6. Spritzgießdüse nach einem der Ansprüche 1 bis 5, **dadurch gekennzeichnet, dass** die Verschlussnadeln (5) der Austrittsöffnungen (2) einen gemeinsamen Antrieb zumindest zum Verschieben in ihre Schließposition haben.

7. Spritzgießdüse nach einem der Ansprüche 1 bis 6, **dadurch gekennzeichnet, dass** die Verschlussnadeln (5) in Schließrichtung gesehen vor dem Eintritt des Zuführkanals (4) für den Kunststoff eine Querschnittsvergrößerung (8) oder einen Bund oder dergleichen als Wirkfläche für den Spritzgießdruck zum Öffnen der Verschlussnadel (5) haben und der in Schließrichtung wirkende Antrieb während des Öffnens der jeweiligen Verschlussnadel (5) ausschaltbar und/oder überwindbar ist.

8. Spritzgießdüse nach einem der Ansprüche 1 bis 7, **dadurch gekennzeichnet, dass** zum Verschieben der Verschlussnadeln (5) in Schließstellung Druckfedern und/oder mechanisch an den Verschlussnadeln (5), insbesondere an ihrem der Austrittsöffnung abgewandten Ende angreifende Verstellmittel vorgesehen sind.

9. Spritzgießdüse nach einem der Ansprüche 1 bis 8, **dadurch gekennzeichnet, dass** zum Verstellen eines kegelförmigen oder Konuskörpers (9) eine in axialer Richtung zentral innerhalb der Spritzgießdüse (1) verstellbare Schub- und Zugstange (11) oder zum Verdrehen einer Nocken- oder Exzenterscheibe (10) eine zentral in der Spritzgießdüse (1) angeordnete Drehstange (13) vorgesehen ist.

10. Spritzgießdüse nach einem der Ansprüche 1 bis 9, **dadurch gekennzeichnet, dass** das an den Verschlussnadeln (5) angreifende Antriebselement derart mit diesen gekuppelt und verbunden ist, dass die eine Bewegung zum Verschließen und die entgegengesetzte Bewegung zum Zurückziehen der Verschlussnadeln (5) in ihre Öffnungsposition dient.

11. Spritzgießdüse nach einem der vorstehenden Ansprüche, **dadurch gekennzeichnet, dass** ihr Gehäuse (14) quer zu den Zuführkanälen (4) für den Kunststoff unterteilt ist und im Bereich der Unterteilung einen Wärmeausgleichsspalt (15) hat.

12. Spritzgießdüse nach einem der Ansprüche 1 bis 11, **dadurch gekennzeichnet, dass** der Wärmeausgleichsspalt (15) an dem Gehäuse (14) der Spritzgießdüse zumindest im Bereich der Zuführkanäle (4) für den Kunststoff durch einen Überlappung oder dergleichen abgedichtet ist.

13. Spritzgießdüse nach einem der Ansprüche 1 bis 12, **dadurch gekennzeichnet, dass** die zur Abdichtung des Wärmeausgleichsspalts (15) im Bereich der Zuführkanäle (4) dienende Überlappung durch Schiebehülsen (16), insbesondere durch jeweils eine an der Innenseite oder Außenseite des Zuführkanals (4) angeordnete Schiebehülse (16) gebildet ist.

14. Spritzgießdüse nach einem der Ansprüche 1 bis 13, **dadurch gekennzeichnet, dass** die im Zentrum des Düsengehäuses (14) angeordnete Stange (11;13) für den gemeinsamen Antrieb der Verschlussnadeln (5) mit einem Dreh- oder Axialantrieb, insbesondere einem Kolben (12), einem Spindelantrieb oder dergleichen versehen oder gekuppelt ist.

15. Spritzgießdüse nach einem der Ansprüche 1 bis 14, **dadurch gekennzeichnet, dass** die Austrittsöffnungen (2) und die darin verschiebbaren Verschlussnadeln (5) in in das Gehäuse (14) der Spritzgießdüse (1) eingesetzten und gegebenenfalls austauschbaren Hülsen angeordnet sind.

16. Spritzgießdüse nach einem der Ansprüche 1 bis 15, **dadurch gekennzeichnet, dass** die Verschlussnadeln (5) jeweils von außen in ihre Lagerstelle axial einführbar und mittels einer an der Außenseite anschraubbaren, die Mündung (6) der Austrittsöffnung (2) aufweisenden Haltekappe (18) festlegbar sind.

17. Spritzgießdüse nach einem der Ansprüche 1 bis 16, **dadurch gekennzeichnet, dass** die Verschlussnadeln (5) in die sie aufnehmende Hülse (17) vor deren Einsetzen in den Düsenkörper von der späteren Innenseite aus einschiebbar und mittels eines Bundes, einer Querschnittsvergrößerung oder dergleichen in axialer Richtung derart festlegbar sind, dass die Verstellbewegung in Schließrichtung begrenzt und die Verschlussnadel (5) in radialer Richtung festgelegt ist.

18. Spritzgießdüse nach einem der Ansprüche 1 bis 17, **dadurch gekennzeichnet, dass** mehr als zwei Austrittsöffnungen mit darin verstellbaren Verschlussnadeln (5) an dem selben Düsengehäuse (14) insbesondere in der selben Ebene angeordnet und mit dem selben Antriebselement in Schließstellung bewegbar sind.

## Claims

1. Injection moulding nozzle (1) for plastic comprising at least two outlet openings (2) directed in their end region to different sides and intended for feeding different gates and comprising a feed channel (4) for feeding the plastic to the outlet openings (2), the outlet openings (2) directed to different sides having in each case a needle valve with a valve needle (5) moveable in the direction of the outlet openings (2) and a drive for moving the valve needles (5) to the closed position thereof, **characterized in that** a common drive element is provided for moving a plurality of valve needles (5) or all said valve needles in the closing direction and **in that** this drive element is an adjusting body moveable between the ends of a plurality of valve needles (5) and having different cross-sections.

2. Injection moulding nozzle according to Claim 1, **characterized in that** the adjusting body is a cone (9) or a similar tapering element or a cam disc or eccentric disc (10) or the like.

3. Injection moulding nozzle according to Claim 1 or 2, **characterized in that** it has a separate feed channel (4) for the plastic for each lateral outlet opening (2) provided with a valve needle (5), and the feed channels (4) are arranged outside the middle of the injection moulding nozzle (1).

4. Needle valve nozzle according to any of Claims 1 to 3, **characterized in that** the feed channels (4) for the plastic enter the outlet openings (2) close to the ends of the individual valve needles (5) before the mouths (6) of said outlet openings.

5. Injection moulding nozzle according to any of Claims 1 to 4, **characterized in that** the outlet openings (2) and the valve needles (5) moveable in them are arranged approximately radially and in particular in the same plane running transversely to the central longitudinal axis of the injection moulding nozzle (1).

6. Injection moulding nozzle according to any of Claims 1 to 5, **characterized in that** the valve needles (5) of the outlet openings (2) have a common drive at least for movement to their closed position.

7. Injection moulding nozzle according to any of Claims 1 to 6, **characterized in that,** viewed in the closing direction, the valve needles (5) have a cross-sectional enlargement (8) or a collar or the like as an active surface for the injection moulding pressure for opening the valve needle (5), before the entrance of the feed channel (4) for the plastic, and the drive acting in the closing direction can be capable of being switched off and/or overridden during the opening of the respective valve needle (5).

8. Injection moulding nozzle according to any of Claims 1 to 7, **characterized in that** pressure springs and/or adjusting means mechanically engaging the valve needles (5), in particular at their end facing away from the outlet opening, are provided for moving the valve needles (5) to the closed position.

9. Injection moulding nozzle according to any of Claims 1 to 8, **characterized in that** a connecting rod and tie bar (11) moveable centrally within the injection moulding nozzle (1) in the axial direction is provided for moving a conical body (9) or a rotating rod (13) arranged centrally in the injection moulding nozzle (1) is provided for rotating a cam disc or eccentric disc (10).

10. Injection moulding nozzle according to any of Claims 1 to 9, **characterized in that** the drive element engaging the valve needles (5) is coupled and connected to said valve needles in such a way that one movement serves for closing and the opposite movement for retracting the valve needles (5) to their opening position.

11. Injection moulding nozzle according to any of the preceding claims, **characterized in that** its housing (14) is divided transversely to the feed channels (4) for the plastic and has a heat compensation gap (15) in the region of the division.

12. Injection moulding nozzle according to any of Claims 1 to 11, **characterized in that** the heat compensation gap (15) on the housing (14) of the injection moulding nozzle is sealed by an overlap or the like at least in the region of the feed channels (4).

13. Injection moulding nozzle according to any of Claims 1 to 12, **characterized in that** the overlap which serves for sealing the heat compensation gap (15) in the region of the feed channels (4) is formed by sliding sleeves (16), in particular by in each case a sliding sleeve (16) arranged on the inside or outside of the feed channel (4).

14. Injection moulding nozzle according to any of Claims 1 to 13, **characterized in that** the rod or bar (11; 13) arranged in the centre of the nozzle housing (14) and intended for the common driving of the valve needles (5) is provided with or coupled to a rotary or axial drive, in particular a piston (12), a spindle drive or the like.

15. Injection moulding nozzle according to any of Claims 1 to 14, **characterized in that** the outlet openings (2) and the valve needles (5) movable therein are arranged in sleeves which are inserted into the housing (14) of the injection moulding nozzle (1) and are optionally replaceable.

16. Injection moulding nozzle according to any of Claims 1 to 15, **characterized in that** the valve needles (5) are in each case axially insertable from the outside into their mounting position and can be fixed by means of a retaining cap (18) which can be screwed on the outside and has the mouth (6) of the outlet opening (2).

17. Injection moulding nozzle according to any of Claims 1 to 16, **characterized in that** the valve needles (5) can be inserted from the subsequent inside into the sleeve (17) holding them, before the insertion thereof into the nozzle body and can be fixed in the axial direction by means of a collar, a cross-sectional enlargement or the like in such a way that the adjusting movement in the closing direction is limited and the valve needle (5) is fixed in the radial direction.

18. Injection moulding nozzle according to any of Claims 1 to 17, **characterized in that** more than two outlet openings with valve needles (5) moveable therein are arranged on the same nozzle housing (14), in particular in the same plane, and are moveable with the same drive element to the closed position.

## Revendications

1. Buse (1) de moulage par injection de matière plastique, avec au moins deux ouvertures de sortie (2) dirigées dans leur région terminale vers différents côtés et destinées à alimenter différents orifices d'injection, et avec un canal d'alimentation (4) pour apporter la matière plastique aux ouvertures de sortie (2), sachant que les ouvertures de sortie (2) dirigées vers différents côtés présentent respectivement une fermeture à aiguille avec une aiguille de fermeture (5) mobile en direction de l'ouverture de sortie (2), et un entraînement pour déplacer les aiguilles de fermeture (5) dans leur position fermée,
**caractérisée en ce qu'**un élément d'entraînement commun est prévu pour déplacer plusieurs ou la totalité des aiguilles de fermeture (5) dans la direction de fermeture, et **en ce que** cet élément d'entraînement est un corps déplaceur présentant différentes sections et pouvant être déplacé entre les extrémités de plusieurs aiguilles de fermeture (5).

2. Buse de moulage par injection selon la revendication 1, **caractérisée en ce que** le corps déplaceur est un cône (9), un élément conique ou un élément analogue se rétrécissant, ou un disque à came ou excentrique (10) ou analogue.

3. Buse de moulage par injection selon la revendication 1 ou 2, **caractérisée en ce qu'**elle présente un propre canal (4) d'alimentation de matière plastique pour chaque ouverture de sortie latérale (2) pourvue d'une aiguille de fermeture (5), et les canaux d'alimentation (4) sont disposés en dehors du milieu de la buse (1) de moulage par injection.

4. Buse de moulage par injection selon l'une des revendications 1 à 3, **caractérisée en ce que** les canaux (4) d'alimentation de matière plastique débouchent dans les ouvertures de sortie (2) devant les embouchures (6) de celles-ci, à proximité des extrémités des aiguilles de fermeture individuelles (5).

5. Buse de moulage par injection selon l'une des revendications 1 à 4, **caractérisée en ce que** les ouvertures de sortie (2) et les aiguilles de fermeture (5) mobiles dans celles-ci sont disposées environ radialement et notamment dans le même plan s'étendant transversalement à l'axe médian longitudinal de la buse (1) de moulage par injection.

6. Buse de moulage par injection selon l'une des revendications 1 à 5, **caractérisée en ce que** les aiguilles de fermeture (5) des ouvertures de sortie (2) possèdent un entraînement commun au moins pour les déplacer dans leur position fermée.

7. Buse de moulage par injection selon l'une des revendications 1 à 6, **caractérisée en ce que** les aiguilles de fermeture (5) possèdent avant l'entrée du canal (4) d'alimentation de matière plastique, considéré dans la direction de fermeture, un agrandissement de section (8) ou un collet ou analogue comme surface active pour la pression d'injection destinée à ouvrir l'aiguille de fermeture (5), et l'entraînement agissant dans la direction de fermeture peut être désactivé et/ou surmonté pendant l'ouverture de l'aiguille de fermeture respective (5).

8. Buse de moulage par injection selon l'une des revendications 1 à 7, **caractérisée en ce que** des ressorts de pression et/ou des moyens déplaceurs agissant mécaniquement sur les aiguilles de fermeture (5), notamment à leur extrémité éloignée de l'ouverture de sortie, sont prévus pour déplacer les aiguilles de fermeture (5) en position fermée.

9. Buse de moulage par injection selon l'une des revendications 1 à 8, **caractérisée en ce qu'**une bielle (11) de poussée ou de traction, mobile en direction axiale centralement à l'intérieur de la buse (1) de moulage par injection, est prévue pour déplacer un corps conique ou sous forme de cône (9), ou bien une bielle rotative (13), disposée centralement dans la buse (1) de moulage par injection, est prévue pour faire tourner un disque à came ou excentrique (10).

10. Buse de moulage par injection selon l'une des revendications 1 à 9, **caractérisée en ce que** l'élément d'entraînement agissant sur les aiguilles de fermeture (5) est couplé et relié à celles-ci de telle sorte qu'un mouvement sert à la fermeture et que le mouvement opposé sert à ramener les aiguilles de fermeture (5) dans leur position ouverte.

11. Buse de moulage par injection selon l'une des revendications précédentes, **caractérisée en ce que** son boîtier (14) est divisé transversalement aux canaux (4) d'alimentation de matière plastique et possède dans la région de la division un interstice (15) de compensation thermique.

12. Buse de moulage par injection selon l'une des revendications 1 à 11, **caractérisée en ce que** l'interstice (15) de compensation thermique prévu sur le boîtier (14) de la buse de moulage par injection est, au moins dans la région des canaux (4) d'alimentation de matière plastique, hermétiquement fermé par un chevauchement ou analogue.

13. Buse de moulage par injection selon l'une des revendications 1 à 12, **caractérisée en ce que** le chevauchement servant à fermer hermétiquement l'interstice (15) de compensation thermique dans la région des canaux d'alimentation (4) est formé par des manchons coulissants (16), notamment par un manchon coulissant respectif (16) disposé sur le côté intérieur ou extérieur du canal d'alimentation (4).

14. Buse de moulage par injection selon l'une des revendications 1 à 13, **caractérisée en ce que** la bielle (11 ; 13) disposée au centre du boîtier de buse (14) pour l'entraînement commun des aiguilles de fermeture (5) est pourvue d'un ou couplée à un entraînement axial ou en rotation, notamment un piston (12), un entraînement à broche ou analogue.

15. Buse de moulage par injection selon l'une des revendications 1 à 14, **caractérisée en ce que** les ouvertures de sortie (2) et les aiguilles de fermeture (5) mobiles dans celles-ci sont disposées dans des douilles insérées dans le boîtier (14) de la buse (1) de moulage par injection et éventuellement remplaçables.

16. Buse de moulage par injection selon l'une des revendications 1 à 15, **caractérisée en ce que** les aiguilles de fermeture (5) peuvent être respectivement introduites axialement de l'extérieur à leur point de montage, et fixées au moyen d'une coiffe de retenue (18) pouvant être vissée sur le côté extérieur et présentant l'embouchure (6) de l'ouverture de sortie (2).

17. Buse de moulage par injection selon l'une des revendications 1 à 16, **caractérisée en ce que** les aiguilles de fermeture (5) peuvent être, avant leur insertion dans le corps de buse, enfilées par le côté ultérieurement intérieur dans la douille (17) qui les reçoit et, au moyen d'un collet, d'un agrandissement de section ou analogue, fixées en direction axiale de telle sorte que le mouvement de déplacement dans la direction de fermeture est limité et que l'aiguille de fermeture (5) est fixée en direction radiale.

18. Buse de moulage par injection selon l'une des revendications 1 à 17, **caractérisée en ce que** plus de deux ouvertures de sortie pourvues d'aiguilles de fermeture (5) pouvant être déplacées dans celles-ci sont disposées sur le même boîtier de buse (14), notamment dans le même plan, et peuvent être déplacées par le même élément d'entraînement dans la direction de fermeture.
